# EUROPEAN PATENT APPLICATION

(11) **EP 4 786 562 A1**
(43) Date of publication of application: **05.08.2026**
(21) Application number: 24872596.2
(22) Date of filing: 30.09.2024
(51) Int. Cl.: C09K 11/88, B82Y 20/00, B82Y 40/00, C09K 11/08, C09K 11/54, C09K 11/55, C09K 11/56

(54) **QUANTUM DOT**

(30) Priority: 29.09.2023 JP 2023170558
(71) Applicant: Toppan Holdings Inc., Tokyo 110-0016 (JP)
(72) Inventor: MIYANAGA, Akiharu, Tokyo 110-0016 (JP); ITO, Tetsuji, Tokyo 110-0016 (JP); TANAKA, Masanori, Tokyo 110-0016 (JP); OGURA, Yuko, Tokyo 110-0016 (JP)
(74) Representative: TBK
(86) International application number: PCT/JP2024/034958
(87) International publication number: WO 2025/070817

(57) **Abstract**

An object is to provide quantum dots each having a core-shell structure which can be realized to have Type I structure in a ZnTe core. The quantum dots according to the present invention are cadmium-free core-shall structured quantum dots, and is characterized in that the core contains Zn and Te and the shell contains Mg and S. In the present invention, the quantum dots are structured with (a core containing Zn and Te)/MgS, (a core containing Zn and Te)/MgS, (a core containing Zn and Te)/ZnMgS/MgS, (a core containing Zn and Te)/MgS/ZnS, (a core containing Zn and Te)/ZnMgS/MgS/ZnS, (a core containing Zn and Te)/MgS/ZnO, or (a core containing Zn and Te)/ZnMgS/MgS/ZnO.

## Description

### [Technical Field]

The present invention relates to cadmium-free ZnTe-based quantum dots.

### [Background Art]

Quantum dots are nanoparticles composed of several hundred to several thousand atoms, with particle sizes ranging from several nanometers to tens of nanometers. The quantum dots are also referred to as fluorescent nanoparticles, semiconductor nanoparticles, or nanocrystals.

The quantum dots can vary emission wavelengths thereof depending on the particle size and composition of the nanoparticles. Key performance indicators for the quantum dots include a fluorescence quantum yield (QY) and a fluorescence full width at half maximum (FWHM). When utilizing the quantum dots as wavelength conversion materials in the visible light range, the most significant characteristic is having a broad range of colors the quantum dots can express, namely, a high color gamut. Thus, in achieving wide color gamut using wavelength conversion elements with quantum dots in the visible light region, a crucial optical property is the fluorescence half-width.

The highly efficient quantum dots traditionally employed primarily contain cadmium (Cd). Cd-containing quantum dots offer the advantages of high quantum yield and narrow fluorescence half-width. However, due to the toxicity of Cd, its use is restricted in various countries, presenting a significant barrier to practical application.

In contrast, numerous studies have also explored the development of cadmium-free quantum dots which do not contain Cd. One representative example is chalcopyrite-type copper indium sulfide (CuInS₂): CIS-type quantum dots (see, for example, Patent Document 1). However, as the luminescence principle is based on defect luminescence, the optical properties thereof are not as good as those of Cd-based quantum dots and generally have a fluorescence half-width ranging from 80 to 100 nm, or more. Other chalcopyrite-type quantum dots besides CIS are similar; that is, no synthesis of chalcopyrite-type quantum dots with a fluorescence half-width of lower than 60 nm has been reported yet.

Meanwhile, another representative example of the Cd-free quantum dots is indium phosphide (InP): InP-based quantum dots (see, for example, Patent Document 1). However, compared to CdSe-based quantum dots, InP-based quantum dots exhibit a broader fluorescence half-width. To date, no synthesis of InP-based quantum dots with a fluorescence half-width lower than 35 nm has been reported yet.

Furthermore, while zinc selenide (ZnSe) is known for cadmium-free quantum dots, the bandgap of ZnSe is 2.7 eV so that it is impossible for ZnSe to produce green luminescence by using ZnSe alone.

Another material composed of zinc-based quantum dots may be zinc telluride (ZnTe), but there are not many reports concerning its solution synthesis.

The following non-patent document 1 details a direct synthesis method for ZnTe using organic zinc compounds and trialkylphosphine tellurides. Although ZnTe obtained in this paper has been studied in detail, including the shift of absorption towards longer wavelengths with particle growth, none of the ZnTe synthesized in this paper exhibits fluorescent properties.

In addition, in the following Non-Patent Document 2, the synthesis of ZnTe with a sphalerite structure is achieved using Te reduced by an organic zinc compound and Super-Hydride (brand name; lithium triethylborohydride: LiBHEt₃). Research has been reported on controlling the morphology of ZnTe nanoparticles by varying the reaction conditions. A key feature of this synthesis method is the use of Super-Hydride which is highly reactive and difficult to employ in mass production. This paper details the particle morphology, crystal structure, and absorption spectrum of the obtained ZnTe, but no mention is made of its fluorescence properties.

### [Citation List]

### [Patent Literature]

Patent Literature 1: International Publication No. WO 2007/060889 Brochure

### [Non-Patent Literature]

Non-Patent Literature 1: Journal of Materials Chemistry. C, 2014, 2, 2877 "Synthesis and properties of ZnTe and ZnTe/ZnS core/shell semiconductor nanocrystals"
Non-Patent Literature 2: Journal of Physical Chemistry C, 2008, 112(14), pp 5454-5458 "Shape-Control of ZnTe Nanocrystal Growth in Organic Solution"

### [Summary of Invention]

### [Technical Problem]

Cadmium-free quantum dots include InP and AgInGaS. Among such cadmium-free quantum dots, ZnTe can be cited as a candidate with a narrow fluorescence half-width, though ZnTe has not yet reached commercialization.

The present invention has been devised in view of the foregoing current conditions and aims to provide quantum dots with a core-shell structure capable of realizing a Type I structure within a ZnTe-based core.

### [Solution to Problem]

The quantum dots according to the present invention are characterized in that the quantum dots are composed of a cadmium-free core-shell structure quantum dots, wherein the core contains at least Zn and Te, and the shell contains at least Mg and S.

### [Advantageous Effect of the Invention]

In the quantum dots according to the present invention, a Type I structure can be realized.

### [Brief Description of Drawings]

Fig. 1 provides pictorial illustrations each showing a quantum dot provided in an embodiment according to the present invention.
Fig. 2A is an energy level diagram provided when quantum dots with a core-shell structure are employed.
Fig. 2B is an energy level diagram provided when quantum dots with a core-shell structure are employed.
Fig. 2C is an energy level diagram provided when quantum dots with a core-shell structure are employed.
Fig. 2D is an energy level diagram provided when quantum dots with a core-shell structure are employed.
Fig. 2E is an energy level diagram according to an embodiment, in which the quantum dots are composed of a core-shell structure of Type I.
Fig. 2F is an energy level diagram according to an embodiment, in which the quantum dots are composed of a core-shell structure of Type I.
Fig. 2G is an energy level diagram according to an embodiment, in which the quantum dots are composed of a core-shell structure of Type I.
Fig. 2H is an energy level diagram according to an embodiment, in which the quantum dots are composed of a core-shell structure of Type I.
Fig. 2I is an energy level diagram according to an embodiment, in which the quantum dots are composed of a core-shell structure of Type I.
Fig. 2J is an energy level diagram according to an embodiment, in which the quantum dots are composed of a core-shell structure of Type I.
Fig. 2K is an energy level diagram according to an embodiment, in which the quantum dots are composed of a core-shell structure of Type I.
Fig. 3A shows an MgS synthesis flow.
Fig. 3B is a conceptual diagram showing ZnMgS synthesis.
Fig. 4 is a schematic diagram illustrating an application example of the quantum dot-containing sheet according to the example.
Fig. 5 is a photoluminescence (PL) spectrum of ZnTe adopted in the example 1.
Fig. 6 is a PL spectrum of ZnTe adopted in the example 2.
Fig. 7 is a PL spectrum of ZnTeS adopted in the example 3.
Fig. 8 is a PL spectrum of ZnTeSeS adopted in the example 4.
Fig. 9 is a PL spectrum of ZnTe adopted in the example 5.
Fig. 10 is a PL spectrum of ZnTeS adopted in the example 6.
Fig. 11 is an SEM (Scanning Electron Microscopy) image of ZnTe adopted in the example 1.
Fig. 12 is an XRD (X-ray diffraction) spectrum of ZnTe adopted in the example 1.
Fig. 13 is an SEM picture of Cu₂Te provided in the example 1.
Fig. 14 is a PL spectrum of ZnTe provided in an example 7.
Fig. 15 is a PL spectrum of ZnTeSe provided in an example 8.
Fig. 16 is a PL spectrum of ZnTeSe provided in an example 9.
Fig. 17 is a PL spectrum of ZnTeSe provided in an example 10.

### [Description of Embodiments]

The following provides a detailed description of one embodiment according to the present invention (hereinafter abbreviated as 'embodiment'). It should be noted that the present invention is not limited to the following embodiment and may be implemented in various modifications within the scope of essence of the present invention.

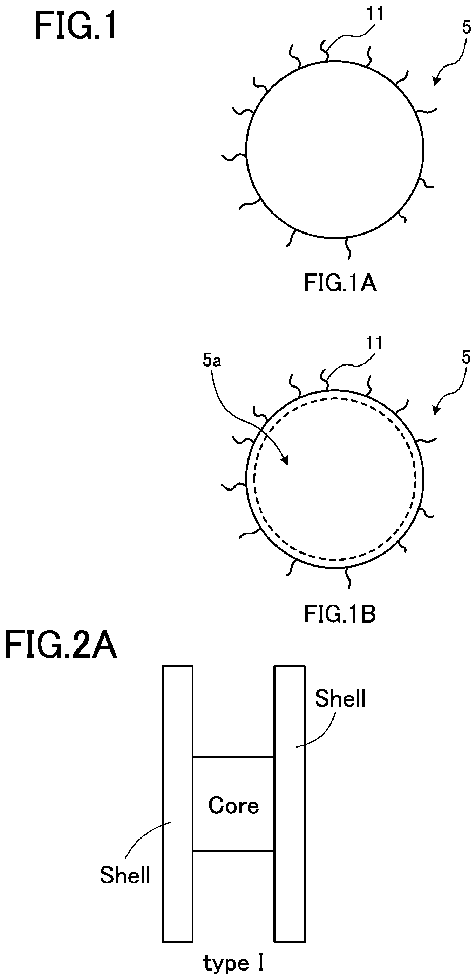

Fig. 1 is a schematic diagram exemplifying a quantum dot employed in the present embodiment. The quantum dot 5 shown in Fig. 1A is a nanocrystal that does not contain Cd.

In the present embodiment, it is preferred that the quantum dot 5 is composed of a nanocrystal which contains zinc and tellurium (hereinafter referred to as Zn and Te); zinc, tellurium, and sulfur (hereinafter referred to as Zn, Te, and S); or zinc, tellurium, selenium, and sulfur (hereinafter referred to as Zn, Te, Se, and S). A nanocrystal containing zinc, tellurium, and selenium is also acceptable to the present embodiment.

The quantum dot 5 exhibits fluorescence characteristics due to band-edge emission and demonstrates quantum size effects owing to its particle size.

In the present embodiment, the 'nanocrystals' refers to nanoparticles with a particle size of several nanometers to tens of nanometers. In the present embodiment, numerous quantum dots 5 can be generated with a substantially uniform particle size.

The quantum dot 5 contains Zn and Te; Zn and Te and S; Zn, Te and Se; or Zn, Te, S and Se as its main components, although other elements may also be contained in the quantum dot 5. However, it is preferable that Cd is not included, and that phosphorus (P) is also not included. Organophosphorus compounds are expensive and readily oxidize in the air, thus leading to unstable synthesis, increased manufacturing costs, unstable fluorescence characteristics, and/or a tendency towards complex manufacturing processes. In the present embodiment, it is preferable that no PoHS regulated substances are included.

The quantum dot 5 according to the present embodiment has a fluorescence half-width of 40 nm or less. The 'fluorescence half-width' refers to a full width at half maximum (FWHM) of the fluorescence wavelength spread at half the peak intensity value in the fluorescence spectrum. It is also preferable for the fluorescence half-width to be 30 nm or less. It is further preferable for the fluorescence half-width to be 28 nm or less. It is even more preferable for the fluorescence half-width to be 26 nm or less. Moreover, it is further preferable for the fluorescence half-width to be 25 nm or less. Moreover, it is even more preferable for the fluorescence half-width to be 23 nm or less. Thus, by enabling a narrower fluorescence half-width, an improvement in high color gamut can be achieved. In the present embodiment, the reaction system for synthesizing quantum dots 5 involves synthesizing copper chalcogenide as a precursor, followed by a metal exchange reaction on the precursor. Manufacturing the quantum dots 5 based on this indirect synthesis reaction enables a narrower fluorescence half-width, specifically achieving a fluorescence half-width of 40 nm or less (preferably 30 nm or less).

As shown in Fig. 1A, it is preferable for numerous organic ligands 11 to be coordinated to the surfaces of quantum dots 5. This suppresses aggregation between the quantum dots 5, thereby enabling the desired optical characteristics to be generated. The ligands that can be used in the reaction are not particularly limited, but the following ligands, for example, can be cited as representative ones.

Aliphatic primary amines, such as: Oleylamine: C₁₈H₃₅NH₂, Stearyl (octadecyl)amine: C₁₈H₃₇NH₂, Dodecyl (lauryl)amine: C₁₂H₂₅NH₂, Decylamine: C₁₀H₂₁NH₂, Octylamine: C₈H₁₇NH₂
Fatty acid series, such as: Oleic acid: C₁₇H₃₃COOH, Stearic acid: C₁₇H₃₅COOH, Palmitic acid: C₁₅H₃₁COOH, Myristic acid: C₁₃H₂₇COOH, Lauric acid: C₁₁H₂₃COOH, Decanoic acid: C₉H₁₉COOH, Octanoic acid: C₇H₁₅COOH
Thiol compounds, such as: Octadecanthiol: C₁₈H₃₇SH, Hexadecanthiol: C₁₆H₃₃SH, Tetradecanthiol: C₁₄H₂₉SH, Dodecanthiol: C₁₂H₂₅SH, Decanthiol: C₁₀H₂₁SH, Octanthiol: C₈H₁₇SH
Phosphine compounds, such as: Trioctylphosphine: (C₈H₁₇)₃P, Triphenylphosphine: (C₆H₅)₃P, Tributylphosphine: (C₄H₉)₃P
Phosphine oxide derivatives, such as: Trioctyl phosphine oxide: (C₈H₁₇)₃P=O, Triphenyl phosphine oxide: (C₆H₅)₃P=O,
Tributyl phosphine oxide: (C₄H₉)₃P=O

In the present embodiment, the ligand is not limited to monofunctional small molecules, and it may also employ bifunctional, trifunctional, or tetrafunctional molecules, or alternatively, employ oligomers or polymers that are polyfunctional.

The quantum yield of the quantum dot 5 employed in the present embodiment is 5 % or more. Alternatively, it is favorable that the quantum yield is 10% or more, more preferably 20% or more, even more preferably 30% or more, more preferably 40 % or more, more preferably at 50 % or more, and most preferably 60% or more. In this way, in the present embodiment, the quantum yield of the quantum dot can be enhanced.

In the present embodiment, the fluorescence wavelength can be freely controlled to a degree where fluorescence wavelength ranges, approximately, from 490 nm and more to 550 nm or less. For example, the quantum dot 5 in the present embodiment is a solid solution based on ZnTe, which utilizes chalcogen elements other than zinc. In the present embodiment, it is possible to control the fluorescence wavelength of the quantum dot 5 to green by adjusting the particle size and composition of quantum dot 5.

The quantum dot 5 shown in Fig. 1B has a core-shell structure provided with a core 5a and a shell 5b coated on the surface of the core 5a. As shown in Fig. 1B, it is preferable that numerous organic ligands 11 are coordinated on the surface of the quantum dot 5. In addition, the fluorescence half-width of the quantum dot 5 shown in Fig. 1B is 40 nm or less. It is preferable that the fluorescence half-width is 30 nm or less.

The core 5a of the quantum dot 5, which is shown in Fig. 1B, is composed of as the nanocrystal shown in Fig. 1A. Hence, the core 5a is preferably made of ZnTe, ZnTeS, ZnTeSe, or ZnTeSeS. In the same way as the core 5a, the shell 5b does not contain cadmium (Cd).

In the present embodiment, the shell 5b preferably contains Mg and S. The shell 5b is preferably composed of MgS or ZnMgS.

The shell 5b may be in a solid solution state on the surface of core 5a. In Fig. 1B, the boundary between core 5a and shell 5b is shown as a dotted line, which indicates that whether the boundary between the core 5a and the shell 5b can or cannot be confirmed by analysis is not important.

In the present embodiment, the quantum dot 5 is produced to have the shell 5b formed on the surface of the core 5a via a buffer layer. The buffer layer is a layered region where at least some or all of the elements constituting the core 5a are mixed with at least some or all of the elements constituting the shell 5b.

Thus, as one example, the quantum dot 5 according to the present embodiment is composed of ZnTe/ZnMgS/MgS.

In the present embodiment, the core-shell structure includes the buffer layer. That is, specifically, the buffer layer can be regarded as the first layer of the shell.

MgS and ZnMgS to be used as shells are prone to hydrolysis. Thus, it is preferable to form a thin coating layer (protective layer) on the surface of MgS and ZnMgS.

As one example, the quantum dot 5 according to the present embodiment can be composed of ZnTe/MgS/ZnS, ZnTe/ZnMgS/MgS/ZnS, ZnTe/MgS/ZnO, or ZnTe/ZnMgS/MgS/ZnO. In this structure, ZnS and ZnO serve as coating layers (protective layers), whilst the shell consists of MgS or ZnMgS.

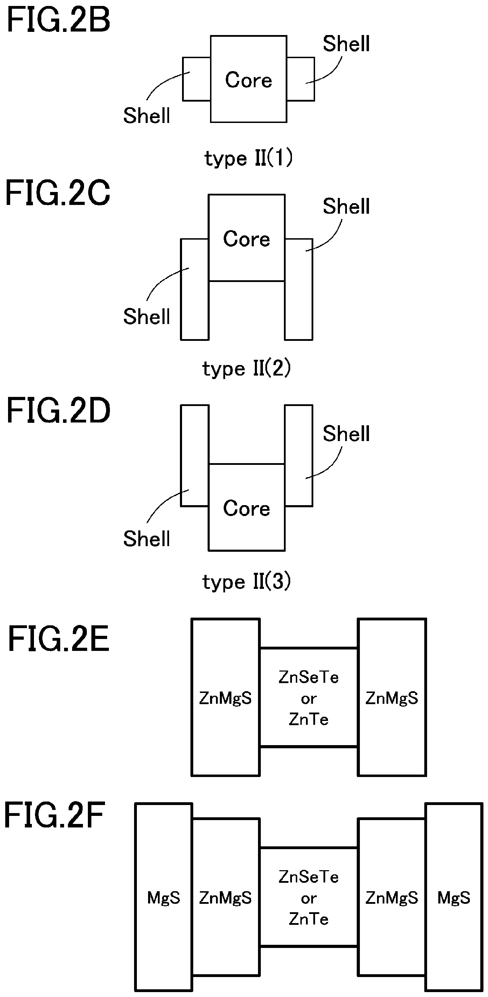

When the quantum dot has a core-shell structure, the energy levels are represented by one of Figs. 2A to 2D. In the case of light-emitting devices, the shell of the core-shell structure is important in enhancing the quantum confinement effect. In particular, the Type I structure shown in Fig. 2A is preferred, where the shell LUMO is energetically higher than the core LUMO, and the shell HOMO is energetically lower than the core HOMO. Due to this reason, it is preferable that the quantum dot used in the present embodiment is structured having a Type I core-shell structure.

However, it is known that when ZnTe/ZnS is used, the core-shell structure does not form a Type I structure. Hence, in the present embodiment, the shell is made from MgS and controlled to stably form a Type I structure.

That is, by employing quantum dots with the core-shell structures shown in Figs. 2E to 2K, the Type I structure can be achieved, thereby enabling an improvement in the quantum yield. For example, while ZnTe/ZnS as described above exhibits a considerably low quantum yield, it was found that quantum dots with the core-shell structure shown in Figs. 2E to 2K can dramatically increase the quantum yield to several tens of percent or more, preferably to 50% or higher.

As shown in Fig. 2E, the core was made of ZnSe or ZnSeTe. Although Zn and Te are the main components, some amounts of Se may also be included. The amount of Se is less than that of Zn and Te (in moles). This is also the case in other embodiments. In Fig. 2E, ZnMgS was employed as the shell. This arrangement enables a Type I structure, where the shell LUMO possesses higher energy than the core LUMO, and the shell HOMO has lower energy than the core HOMO.

In Fig. 2F, MgS and ZnMgS were employed for the shell. By interposing ZnMgS between the core and MgS, the energy levels become stepped in both LUMO and HOMO. This facilitates efficient recombination of holes and electrons, thereby enabling improved luminescence efficiency. Hence, this enables more effective enhancement of the quantum yield. Incidentally, the intermediate layer, ZnMgS, can also be termed a buffer layer, but it constitutes the first layer of the shell.

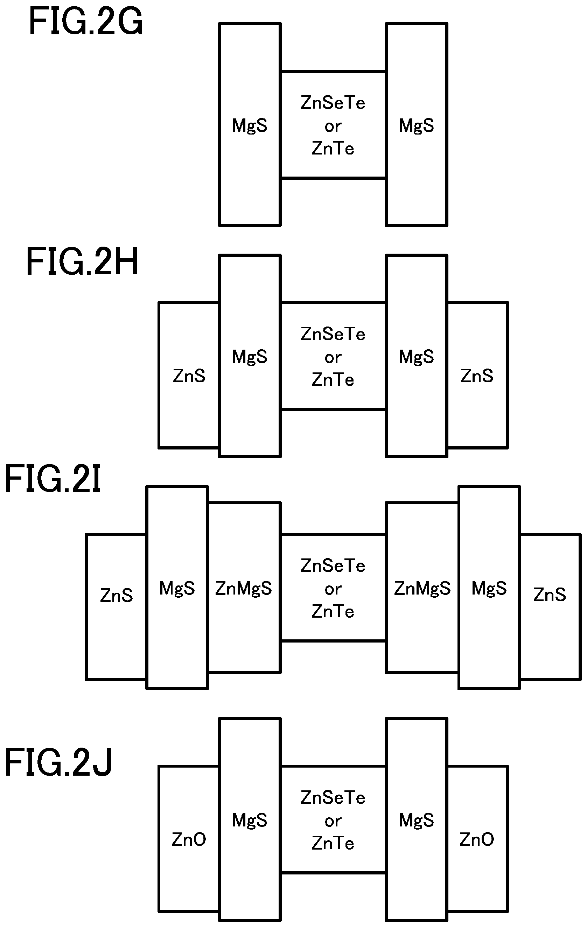

Fig. 2G shows a MgS shell arranged around the core. This example also enables a Type I structure, thus allowing for an improvement in quantum yield. Both Fig. 2E and Fig. 2G feature shells composed of a single layer. The choice of which shell to employ can be determined based on the core configuration and its energy levels to achieve the Type I structure.

In Fig. 2H, a MgS shell is provided around the core, and furthermore, ZnS is provided on the surface of the shell. In this example, the thickness of the ZnS layer is thinner than that of the MgS, resulting in the ZnS serving as a protective layer. That is, since ZnMgS is chemically fragile (e.g., prone to hydrolysis), it is preferable to provide a protective layer. Using ZnS for this protective layer is advantageous as it provides protection for the ZnMgS and enables stable luminous efficiency.

The thickness of the ZnS layer may be thinner than the shell thickness. While it is desirable for the ZnS to cover the entire shell surface approximately uniformly, it may also be partially discontinuous.

Furthermore, comparing the ZnS of the protective layer with the ZnS of the shell, as in the present embodiment, the relationships are provided such that 'conduction band edge of the shell' > 'conduction band edge of the protective layer', and 'valence band edge of the shell' < 'valence band edge of the protective layer'.

Fig. 2I shows an example featuring ZnS as the outermost layer depicted in Fig. 2F. This arrangement protects the chemically vulnerable MgS while enabling stable light-emitting efficiency.

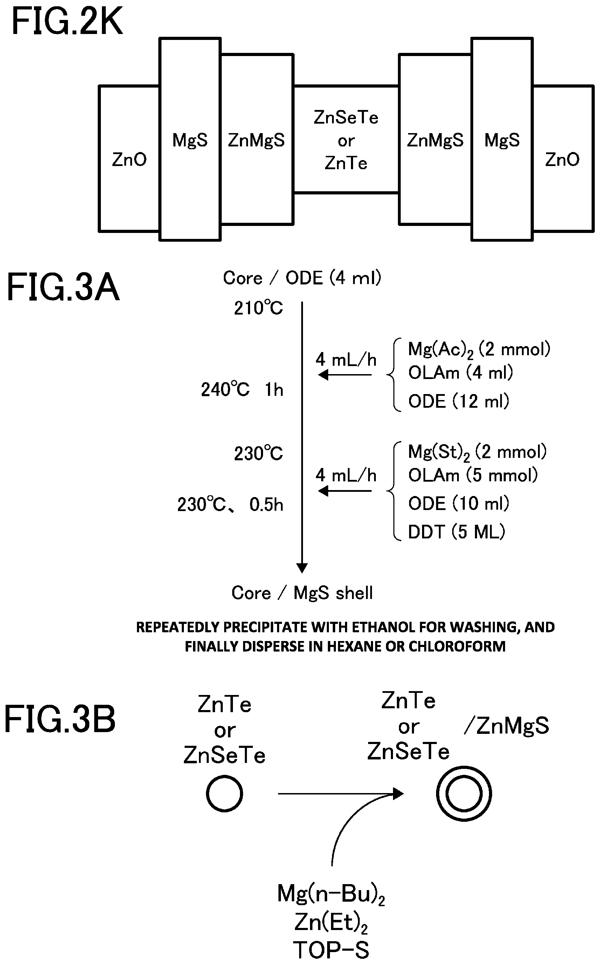

Fig. 2J shows an example where ZnO is provided as a protective layer instead of ZnS shown in Fig. 2H, and Fig. 2K shows an example where ZnO is provided as a protective layer instead of ZnS shown in Fig. 2J. In either case, ZnO can effectively protect the chemically vulnerable MgS.

The ZnO layer thickness can be made thinner than the shell thickness. It is desirable for ZnO to cover the entire shell surface approximately uniformly, although it may be partially discontinuous.

The method for manufacturing the quantum dot 5 according to the present embodiment will now be described.

First, in the present embodiment, a copper chalcogenide (precursor) is synthesized from an organic copper compound or an inorganic copper compound and an organic chalcogen compound. Specifically, it is preferable that the precursor is copper telluride: Cu₂Te, copper telluride sulphide: Cu₂TeS, or copper telluride selenide sulphide: Cu₂TeSeS. The copper telluride may contain a small amount of Se.

In the present embodiment, ZnTe cores alone also emit fluorescence; however, to enhance the fluorescence intensity of the quantum dots, it is preferable to solid-solve S into the ZnTe. Therefore, during the synthesis of Cu₂Te serving as a precursor, it is preferable to add thiols in an amount of 1 to 50 equivalents relative to Te. To obtain quantum dots with higher fluorescence intensity, adding 5 to 20 equivalents is more preferable. This enables the production of Cu₂TeS and Cu₂TeSeS. The thiols are not limited to such compounds, but alternative examples of thiols may include include octadecanthiol: C₁₈H₃₇SH, hexadecanthiol: C₁₆H₃₃SH, tetradecanethiol: C₁₄H₂₉SH, dodecanethiol: C₁₂H₂₅SH, decanethiol: C₁₀H₂₁SH, or octanethiol: C₈H₁₇SH.

In the present embodiment, the Cu raw material for Cu₂Te may be, without particular limitation, for example, one of the following organic copper reagents or inorganic copper reagents. Specifically, exemplified raw materials are as acetates: copper(I) acetate: Cu(OAc), or copper(II) acetate: Cu(Oac)₂; as fatty acid salts: copper stearate: Cu(OC(=O)C₁₇H₃₅)₂, copper oleate: Cu(OC(=O)C₁₇H₃₃)₂, copper myristate: Cu(OC(=O)C₁₃H₂₇)₂, and copper dodecanoate: Cu(OC(=O)C₁₁H₂₃)₂, or copper acetylacetonate: Cu(acac)₂; and Halides: both monovalent and divalent compounds are usable, such as copper chloride (I): CuCl, Copper(II): chloride: CuCl₂, Copper bromide(I): CuBr, Copper(II) bromide: CuBr₂, Copper(I) iodide: CuI, or Copper(II) iodide: CuI₂.

In the present embodiment, as raw materials of tellurium, organic tellurium compounds (organic chalcogen compounds) is employed. Although the structure of such compounds is not specifically limited, by way of examples, trioctylphosphine telluride: (C₈H₁₇)₃P=Te, obtained by dissolving tellurium in trioctylphosphine, or tributylphosphine telluride: (C₄H₉)₃P=Te, obtained by dissolving tellurium in tributylphosphine can be used. In addition, dialkyl tellurides: R₂Te₂, such as diphenyl telluride: (C₆H₅)₂Te₂, may also be used.

Moreover, in the present embodiment, when dissolving selenium, an organic selenium compound (organic chalcogen compound) is used as the raw material of the selenium. Without limiting the structure, by way of examples, solutions such as trioctylphosphine selenide: (C₈H₁₇)₃P=Se, obtained by dissolving selenium in trioctylphosphine; tributylphosphine selenide: (C₄H₉)₃P=Se, obtained by dissolving selenium in tributylphosphine; or octadecene can be used. These solutions are produced by dissolving, at elevated temperatures, selenium in a high-boiling-point solvent which is a long-chain hydrocarbon.

In the present embodiment, the foregoing dissolution is performed by mixing an organic copper compound or an inorganic copper compound with an organic chalcogen compound. As a solvent, octadecene may be used as a high-boiling-point saturated hydrocarbon or unsaturated hydrocarbon. Additionally, as aromatic high-boiling-point solvents, t-butylbenzene: t-butylbenzene, and as high-boiling-point ester solvents, butyl butyrate: C₄H₉COOC₄H₉, benzyl butyrate: C₆H₅CH₂COOC₄H₉, and the like may be used. As alternatives to these solvents, aliphatic amine compounds, fatty acid compounds, or aliphatic phosphorus compounds may also be used.

At this dissolution stage, the reaction temperature is set within the range of 160°C or more and 250°C or less to synthesize the copper chalcogenide (precursor). It is preferable for the reaction temperature to be at a lower temperature, specifically 160°C or more and 220°C or less, and it is more preferable to be at an even lower temperature, specifically 160°C or more and 200°C or less.

Moreover, in the present embodiment, although the reaction method is not particularly limited, it is important to synthesize Cu₂Te, Cu₂TeS, and Cu₂TeSeS with uniform particle sizes in order to obtain quantum dots with a narrow half-width. Therefore, during the synthesis of the precursors Cu₂Te, Cu₂TeS, or Cu₂TeSeS, it is preferable to rapidly add, to the heated organic copper precursor solution, a tellurium precursor solution, or a mixture of tellurium and selenium precursors, or a mixture with a selenium precursor solution.

Moreover, in the present embodiment, it is important to obtain a solid solution of sulfur (S) in the core in order to obtain, as the core, ZnTe with high fluorescence intensity. Thus, for example, in the synthesis of the precursor Cu₂Te, it is preferable to add thiols in an amount of 1 to 50 equivalents relative to Te, and it is more preferable to add 5 to 20 equivalents relative to Te in order to obtain quantum dots with high fluorescence intensity. Although not limiting the thiol materials, materials such as octadecanthiol: C₁₈H₃₇SH, hexadecanthiol: C₁₆H₃₃SH, tetradecanethiol: C₁₄H₂₉SH, dodecanethiol: C₁₂H25SH, decanethiol: C₁₀H₂₁SH, or octanethiol: C₈H₁₇SH. may be used as the thiol.

Organic zinc compounds or inorganic zinc compounds are then prepared as raw materials for ZnTe, ZnTeS, and ZnTeSeS. Organic zinc compounds and inorganic zinc compounds are stable in air and easy to handle as raw materials. Although the structures of the organic zinc compounds and inorganic zinc compounds are not particularly limited, it is preferable to use highly ionic zinc compounds to efficiently carry out the metal exchange reaction. For example, the organic zinc compounds and inorganic zinc compounds shown below can be used. Specifically, by way of example, the following compounds, which are, as acetates: zinc acetate: Zn(OAc)₂ or zinc nitrate: Zn(NO₃)₂; as fatty acid salts: zinc stearate: Zn(OC(=O)C₁₇H₃₅)₂, zinc oleate: Zn(OC(=O)C₁₇H₃₃)₂, zinc palmitate: Zn(OC(=O)C₁₅H₃₁)₂, zinc myristate: Zn(OC(=O)C₁₃H₂₇)₂, zinc dodecanoate: Zn(OC(=O)C₁₁H₂₃)₂, or zinc acetylacetonate: Zn (acac)₂; as halides: Zinc chloride: ZnCl₂, Zinc bromide: ZnBr₂, or Zinc iodide: ZnI₂; and as zinc carbamate: Zinc diethyl dithiocarbamate: Zn(SC(=S)N(C₂H₅)₂)₂, Zinc dimethyl dithiocarbamate: Zn(SC(=S)N(CH₃)₂)₂, or Zinc dibutyl dithiocarbamate: Zn(SC(=S)N(C₄H₉)₂)₂ can be used.

Subsequently, the foregoing organic zinc compounds or inorganic zinc compounds are added to the reaction solution with which the copper chalcogenide precursor is synthesized. This induces a metal exchange reaction between the copper (Cu) in the copper chalcogenide and the zinc (Zn). It is preferable for the metal exchange reaction to occur at temperatures of 180°C or more and 280°C or less. Moreover, it is more preferably conducted at a lower temperature, specifically 180°C or more and 250°C or less.

Furthermore, in the present embodiment, a compound serving an auxiliary role is required during the metal exchange. This compound facilitates the release of the precursor metal into the reaction solution through coordination or chelation.

Compounds possessing the foregoing role include ligands capable of forming complexes with copper. For example, phosphorus-based ligands, amine-based ligands, and sulfur-based ligands are preferred, and among these, phosphorus-based ligands are further preferred due to their high efficiency.

This enables an appropriate metal exchange between Cu and Zn, thus allowing the production of quantum dots with a narrow fluorescence half-width based on Zn and Te.

In addition, it is desirable that the metal exchange with Cu-Zn proceeds quantitatively. It is also desirable to reduce the residual Cu content in the ZnTe in order to enhance the optical characteristics of ZnTe being resulted. The residual Cu content is preferably 100 ppm, more preferably 50 ppm, and ideally 10 ppm or less.

In the present embodiment, copper chalcogenides are synthesized as precursors from organic copper compounds or inorganic copper compounds and organic chalcogen compounds. Quantum dots are synthesized by metal exchange using this precursor. Thus, in the present embodiment, the quantum dots are synthesized via the precursor synthesis, resulting in ZnTe not being synthesized directly. This indirect synthesis method eliminates the need for highly reactive reagents that are hazardous to handle, thereby enabling the safe and stable synthesis of narrow-bandgap ZnTe-based quantum dots.

In addition, in the present embodiment, it is possible to obtain the desired quantum dots by performing Cu-Zn metal exchange in a single-pot process without isolating or purifying the precursor.

Moreover, in the present embodiment, the synthesized quantum dots exhibit fluorescence properties without requiring various treatments such as washing, isolation and purification, coating, or ligand exchange.

On the other hand, as shown in Fig. 1B, the quantum yield can be further increased by coating, with the shell 5b, the core 5a composed of nanocrystals such as ZnTe, ZnTeSe, ZnTeS, or ZnTeSeS.

In the present embodiment, the shell 5b composed of MgS is coated on the surface of the core 5a. Fig. 3A illustrates a synthesis flow for producing MgS.

As shown in Fig. 3A, ODE (4 mL) containing a ZnTe core is heated to 210°C, and Mg(Ac)₂ (2 mmol), OLAm (4 mL), and ODE (12 mL) were added at a rate of 4 mL per hour. The temperature is then raised to 240°C and maintained for one hour. Subsequently, the temperature is lowered to 230°C, and Mg(St)₂ (2 mmol), OLAm (5 mmol), ODE (10 ml), and DDT (5 ml) are added at a rate of 4 ml per hour. Thereafter, the temperature was held at 230°C for 0.5 hours. Next, the substance is repeatedly precipitated and washed with ethanol, and finally dispersed in hexane or chloroform. This yields quantum dots with a core-shell structure composed of ZnTe/MgS.

In addition, the MgS can also be formed via a cation exchange. For example, when the MgS is employed in the shell structure, ZnTe/Cu₂S can be prepared and a Cu-Mg metal exchange can be performed to obtain ZnTe/MgS.

Furthermore, in the present embodiment, the variable adjustment of the conduction band edge (Ec) of ZnTe can also be achieved through a ligand exchange.

Fig. 3B is a schematic diagram illustrating the synthesis of the ZnMgS shell or buffer layer. For example, OLAm (34 ml) is added to a solution containing a ZnTe or ZnSeTe core, and is heated up to 300°C whilst stirring.

Subsequently, TOP (6.4 mL) and 1M TOP-S (3.2 mL) are injected, and immediately thereafter, a total of 3.2 mL of diethyl zinc and di-n-butyl magnesium is rapidly added (refer to Fig. 3B).

In this step, the film thickness of the ZnMgS shell can be adjusted by the number of additions of TOP-S, diethyl zinc, and di-n-butyl magnesium.

The quantum dot 5 according to the present embodiment may constitute a quantum dot-containing composition dispersed in a resin. The resin composition may contain the quantum dots 5 and a fluorescent material different from the quantum dots 5. As the fluorescent materials, a SiAlON-based fluorescent material or KSF (K₂SiF₆:Mn⁴⁺) red phosphor, or others may be used, but the material is not specifically limited.

The resin dispersing quantum dot 5 is not specifically limited, but such materials as polypropylene (PP), polystyrene (PS), acrylic resin, methacrylate resin, MS resin, polyvinyl chloride (PVC), polycarbonate (PC), polyethylene terephthalate (PET), polyethylene naphthalate (PEN), polymethylpentene, liquid crystal polymers, epoxy resin, silicone resin, or mixtures thereof may be used.

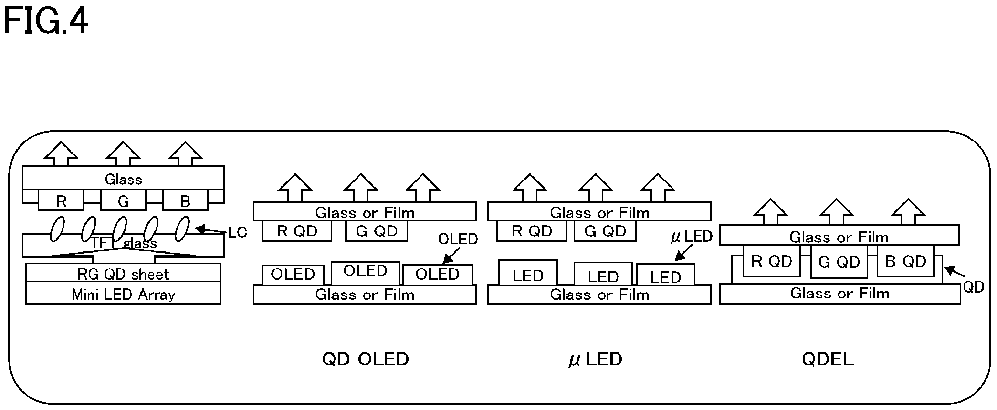

The quantum dot-containing composition produced in the present embodiment may be applied to display devices. The QD sheet according to as shown in Fig. 4 this example can be effectively applied to backlights for display systems, and is also effective for, for example, MiNiLEDs, QD OLEDs, and µLEDs, as shown in Fig. 4.

### Examples

The effects of the present invention are described below by way of examples and comparative examples.
It should be noted that the present invention is not in any way limited by the following examples. It should be noted that the present invention is not in any way limited by the following examples.

### <Raw Materials>

In the present invention, the following raw materials were used to synthesize cadmium-free quantum dots.
Solvent
Octadecene: produced by Aldrich Chemical Company. or Idemitsu Kosan Co., Ltd.
Oleylamine: produced by Kao Corporation
Oleic acid: produced by Kao Corporation
Zinc chloride: produced by Aldrich Chemical Company.
Zinc iodide: produced by Aldrich Chemical Company.
Zinc acetate dihydrate: produced by IKOMA chemical products Co., Ltd.
Anhydrous zinc acetate: produced by Aldrich Chemical Company
Tellurium (4N: 99.99%): produced by Shinko Chemical Co., Ltd., or Aldrich Chemical Company.
Selenium (4N: 99.99%): produced by Shinko Chemical Co., Ltd. or Aldrich Chemical Company.
Sulfur: produced by KISHIDA CHEMICAL Co., Ltd.
Trioctylphosphine: produced by HOKKO CHEMICAL INDUSTRY CO., LTD.
Trioctylphosphine oxide: produced by Aldrich Chemical Company.
Tetradecane: produced by Tokyo Chemical Industry Co., Ltd. (TCI)
Triphenyl phosphite: produced by Aldrich Chemical Company.
Hexadecylamine: produced by NOF CORPORATION
Dodecanethiol: produced by Arkema S.A.

### <Measuring Instruments>

Fluorescence Spectrometer: F-2700, manufactured by JASCO Corporation.
Ultraviolet-Visible Spectrophotometer: V-770, manufactured by Hitachi, Ltd.
Quantum Yield Measurement Device: QE-1100, manufactured by Otsuka Electronics Co., Ltd.
X-ray Diffractometer (XRD): D2 PHASER, manufactured by Bruker Corporation
Scanning Electron Microscope (SEM): SU9000, manufactured by Hitachi, Ltd.

### [Example 1]

A 100 mL reaction vessel was charged with 36.3 mg of anhydrous copper acetate (Cu(OAc)₂) and 0.5 mL of dodecanethiol (DDT), 0.1 mL of oleylamine (OLAm), and 4 mL of octadecene (ODE). Then, under an inert gas (N₂) atmosphere, the reaction vessel was heated whilst stirring to dissolve the raw materials.

To this solution, 0.2 mL of trioctylphosphine telluride: (Te-TOP solution (0.5 M)) was added. The mixture was heated at 220°C for 10 minutes under stirring. The resulting reaction solution (Cu₂Te) was cooled down to room temperature.

Subsequently, 273 mg of zinc chloride (ZnCl₂), 3 mL of trioctylphosphine (TOP), and 0.1 mL of oleylamine (OLAm) were added to the reaction solution. The mixture was heated at 220°C for 30 minutes under stirring in an inert gas (N₂) atmosphere.

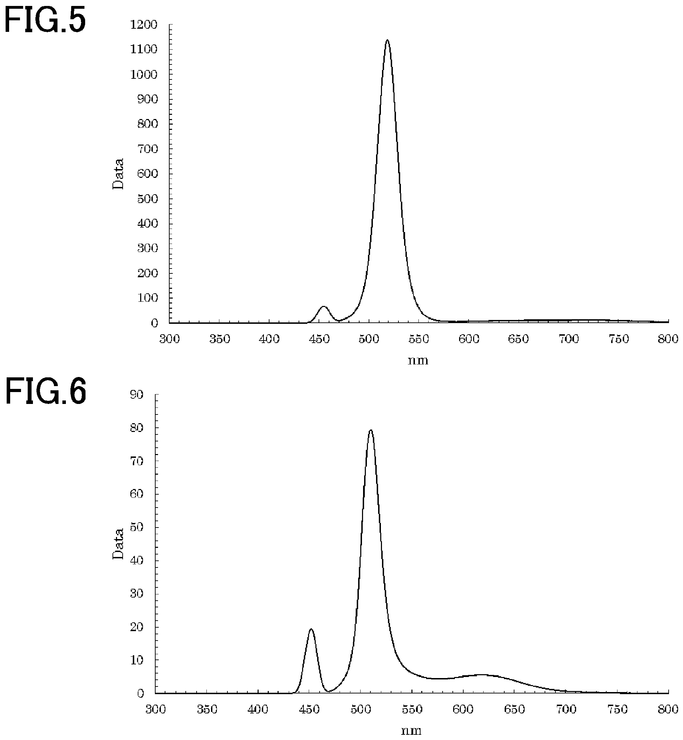

The resulting reaction solution was measured using a fluorescence spectrophotometer. As a result, optical characteristics were obtained with a fluorescence wavelength of approximately 518.5 nm and a fluorescence half-width of approximately 24.3 nm, as shown in Fig. 5.

Furthermore, ethanol was added to the reaction solution to generate a precipitate, which was then recovered by centrifugation. Toluene was then added to the precipitate for dispersion, thus forming a dispersion solution of ZnTe particles.

### [Example 2]

36.3 mg of anhydrous copper acetate (Cu(OAc)₂), 63.8 µL of hexadecanethiol (HDT), 0.1 mL of oleylamine (OLAm), and 10 mL of octadecene (ODE) were charged in a 100 mL reaction vessel. Then, under an inert gas (N₂) atmosphere, the mixture was stirred and heated to dissolve the reactants.

To this solution, 0.2 mL of trioctylphosphine telluride (Te-TOP solution (0.5 M)) was added, and the mixture was stirred and heated at 200°C for 10 minutes.

The resulting reaction solution was cooled down to room temperature. Subsequently, 273 mg of zinc chloride (ZnCl₂), 3 mL of trioctylphosphine (TOP), and 0.1 mL of oleylamine (OLAm) were added to the reaction solution. The mixture was then heated at 250°C for 15 minutes under stirring in an inert gas (N₂) atmosphere.

Measurements of the resulting reaction solution using a fluorescence spectrophotometer yielded optical characteristics, as shown in Fig. 6, with a fluorescence wavelength of approximately 510.0 nm and a fluorescence half-width of approximately 22.3 nm.

Ethanol was added to the resulting reaction solution to induce precipitation. The precipitate was recovered by centrifugation. Toluene was then added to the precipitate for dispersion, thus yielding a dispersion solution of ZnTe particles.

### [Example 3]

36.3 mg of anhydrous copper acetate (Cu(OAc)₂) and 5 mL of dodecanethiol (DDT) were charged in a 100 mL reaction vessel. The mixture was then heated while stirring in an inert gas (N₂) atmosphere to dissolve the starting materials.

To this solution, 0.2 mL of trioctylphosphine telluride (Te-TOP solution (0.5 M)) was added. The mixture was heated at 220°C whilst stirring for 20 minutes. The resulting reaction solution was cooled down to room temperature. Subsequently, 273 mg of zinc chloride (ZnCl₂), 3 mL of trioctylphosphine (TOP), and 0.2 mL of oleylamine (OLAm) were added to the reaction solution. The mixture was then heated under stirring at 220°C for 30 minutes in an inert gas (N₂) atmosphere.

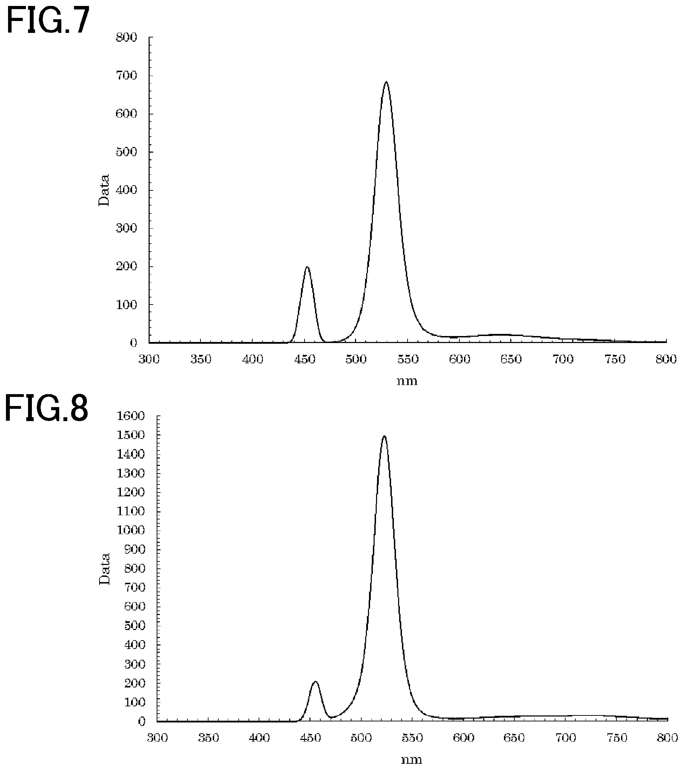

Measurements of the resulting reaction solution using a fluorescence spectrophotometer yielded optical characteristics, as shown in Fig. 7, with a fluorescence wavelength of approximately 529.5 nm and a fluorescence half-width of approximately 26.1 nm.

Ethanol was added to the reaction solution to induce precipitation. The precipitate was recovered by centrifugation. Toluene was then added to the precipitate for dispersion, forming a particle solution of ZnTeS.

### [Example 4]

A 100 mL reaction vessel was charged with 72.7 mg of anhydrous copper acetate (Cu(OAc)₂), 0.4 mL of trioctylphosphine telluride (Te-TOP solution (0.5M)), 0.2 mL of trioctylphosphine selenide (Se-TOP solution (1M)), 1 mL of dodecanethiol (DDT), and 8 mL of octadecene (ODE). The mixture was stirred and heated under an inert gas (N₂) atmosphere to dissolve the starting materials.

This solution was heated while stirring at 220°C for 10 minutes. Subsequently, 0.2 mL of oleylamine (OLAm) was added, and the mixture was heated while stirring at 220°C for 5 minutes. The resulting reaction solution was cooled down to room temperature. Subsequently, 546 mg of zinc chloride (ZnCl₂), 6 mL of trioctylphosphine (TOP), and 0.2 mL of oleylamine (OLAm) were added to the reaction solution. The mixture was heated and stirred at 220°C for 30 minutes under an inert gas (N₂) atmosphere.

Measurements of the resulting reaction solution using a fluorescence spectrophotometer yielded optical characteristics with a fluorescence wavelength of 522.5 nm and a fluorescence half-width of 24.9 nm (refer to Fig. 8).

Ethanol was added to the reaction solution to induce precipitation. The precipitate was recovered by centrifugation. Toluene was then added to the precipitate for dispersion, thus yielding a ZnTeSeS particle dispersion solution.

### [Example 5]

A 100 mL reaction vessel was charged with 36.3 mg of anhydrous copper acetate (Cu(OAc)₂), 0.2 mL of trioctylphosphine telluride (Te-TOP solution (0.5M)), 0.5 mL dodecanethiol (DDT), and 4 mL octadecene (ODE). The mixture was heated under an inert gas (N₂) atmosphere while stirring to dissolve the starting materials.

This solution was heated with stirring at 180°C for 10 minutes, after which 0.1 mL of oleylamine (OLAm) was added and heated with stirring at 180°C for 5 minutes. The resulting reaction solution was cooled down to room temperature. Subsequently, 273 mg of zinc chloride (ZnCl₂), 3 mL of trioctylphosphine (TOP), and 0.1 mL of oleylamine (OLAm) were added to the reaction solution. This mixture was then stirred and heated at 220°C for 30 minutes under an inert gas (N₂) atmosphere.

This solution was cooled down to room temperature, 546 mg of zinc chloride (ZnCl₂) was added, and the mixture was heated under stirring at 220°C for 60 minutes in an inert gas (N₂) atmosphere.

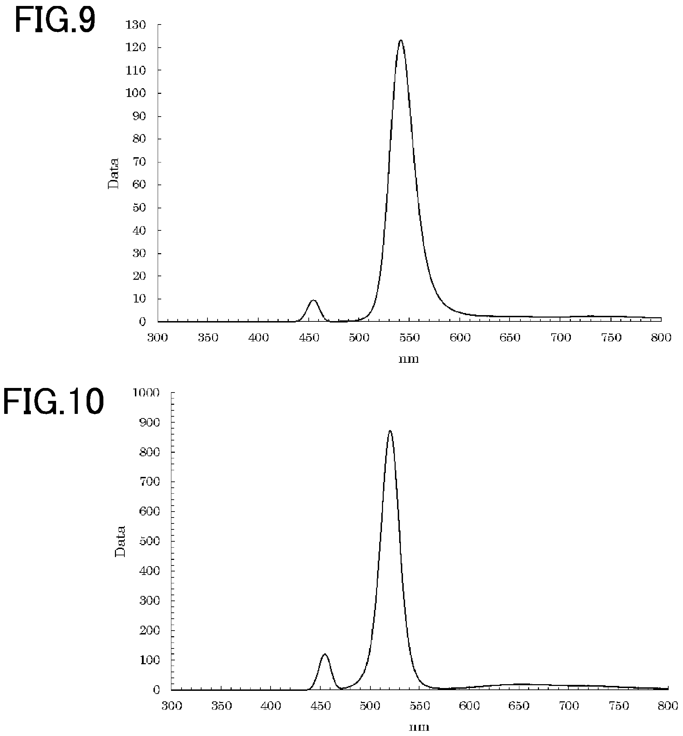

Measurements of the resulting reaction solution using a fluorescence spectrophotometer yielded optical characteristics with a fluorescence wavelength of 542.0 nm and a fluorescence half-width of 27.8 nm (refer to Fig. 9).

Ethanol was added to the resulting reaction solution to induce precipitation. The precipitate was recovered by centrifugation. Toluene was then added to the precipitate for dispersion, thus forming a ZnTe particle dispersion solution.

### [Example 6]

36.3 mg of anhydrous copper acetate (Cu(OAc)₂), 0.2 mL of trioctylphosphine telluride (Te-TOP solution (0.5M)), and 4 mL of dodecanethiol (DDT) were charged into a 100 mL reaction vessel. The mixture was then heated under an inert gas (N₂) atmosphere whilst stirring and heating to dissolve the starting materials.

The solution was heated at 220°C for 10 minutes whilst stirring, after which 0.1 mL of oleylamine (OLAm) was added and heated at 220°C for 10 minutes whilst stirring. The resulting reaction solution was cooled down to room temperature. Ethanol was then added to the resulting reaction solution to induce precipitation. The precipitate was recovered by centrifugation. To this precipitate, 4 mL of ODE and 0.1 mL of OLAm were added and dispersed to produce a CuTe(S) particle dispersion solution.

Subsequently, 273 mg of zinc chloride (ZnCl₂) and 3 mL of trioctylphosphine (TOP) were added to the reaction solution. Under an inert gas (N₂) atmosphere, the mixture was stirred and heated at 220°C for 20 minutes. Further, 0.5 mL of zinc octanoate solution (0.2M) was added, and stirring was continued at 220°C for 10 minutes. The operation of adding additional zinc octanoate and performing heating and stirring was carried out twice in total.

Measurements of the obtained reaction solution using a fluorescence spectrophotometer yielded optical characteristics with a fluorescence wavelength of 520.5 nm and a fluorescence half-width of 22.4 nm (refer to Fig. 10).

Ethanol was added to the resulting reaction solution to induce precipitation. The precipitate was recovered by centrifugation. Toluene was then added to the precipitate for dispersion, thus yielding a ZnTeS particle dispersion solution.

### [Example 7]

A 100 mL reaction vessel was charged with 0.091 g of anhydrous copper acetate (Cu(OAc)₂), 0.625 mL of dodecanethiol (DDT), 0.625 mL of trioctylphosphine (TOP), 0.194 g of trioctylphosphine oxide (TOPO), and 10 mL of tetradecane. The mixture was heated with stirring under an inert gas (N₂) atmosphere to dissolve the starting materials.

To this solution, 0.5 mL of trioctylphosphine telluride (Te-TOP solution (0.5 M)) and 0.125 mL of oleylamine (OLAm) were added. The mixture was heated at 200°C whilst stirring for 15 minutes. The resulting reaction solution was cooled down to room temperature. Subsequently, 0.685 g of zinc chloride (ZnCl₂), 7.5 mL of trioctylphosphine (TOP), 0.25 mL of oleylamine (OLAm), and 0.066 mL of triphenyl phosphinous acid were added to the reaction solution. The mixture was stirred and heated at 220°C for 30 minutes under an inert (N₂) atmosphere. Furthermore, 1.25 mL of zinc octanoate solution (0.1 M) was added, and stirring was continued at 220°C for 10 minutes. The operation of adding additional zinc octanoate and performing heating and stirring was carried out twice in total.

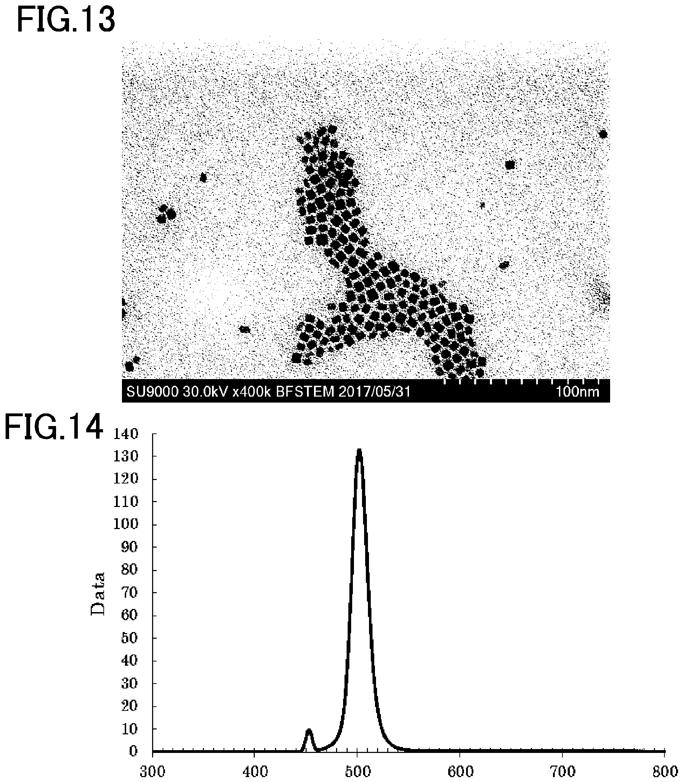

Measurement of the resulting reaction solution using a fluorescence spectrophotometer yielded optical characteristics with a fluorescence wavelength of 502.0 nm and a fluorescence half-width of 17.9 nm (refer to Fig. 14).

Ethanol was added to the resulting reaction solution to induce precipitation. The precipitate was recovered by centrifugation. Toluene was then added to the precipitate for dispersion, thus yielding a ZnTe particle dispersion solution.

### [Example 8]

A 100 mL reaction vessel was charged with 0.8 mL of copper oleate (Cu(OLAc)₂) (0.5 M), 0.4 mL of trioctylphosphine telluride (Te-TOP solution) (0.5 M), 2 mL of Se-ODE solution (0.1 M), 1 mL of dodecanethiol (DDT), and 6.2 mL of octadecene (ODE). The mixture was heated under stirring in an inert gas (N₂) atmosphere to dissolve the starting materials.

This solution was heated at 220°C whilst stirring for 10 minutes, after which 0.2 mL of oleylamine (OLAm) was added and heated at 220°C whilst stirring for 5 minutes. The resulting reaction solution was cooled down to room temperature. Subsequently, 0.546 g of zinc chloride (ZnCl₂), 6 mL of trioctylphosphine (TOP), and 0.2 mL of oleylamine (OLAm) were added to the reaction solution. Under an inert gas (N₂) atmosphere, the mixture was stirred and heated at 220°C for 30 minutes. Further, 0.5 mL of zinc octanoate solution (0.2M) was added, and stirring was continued at 220°C for 10 minutes. The operation of adding additional zinc octanoate and performing heating and stirring was carried out twice in total.

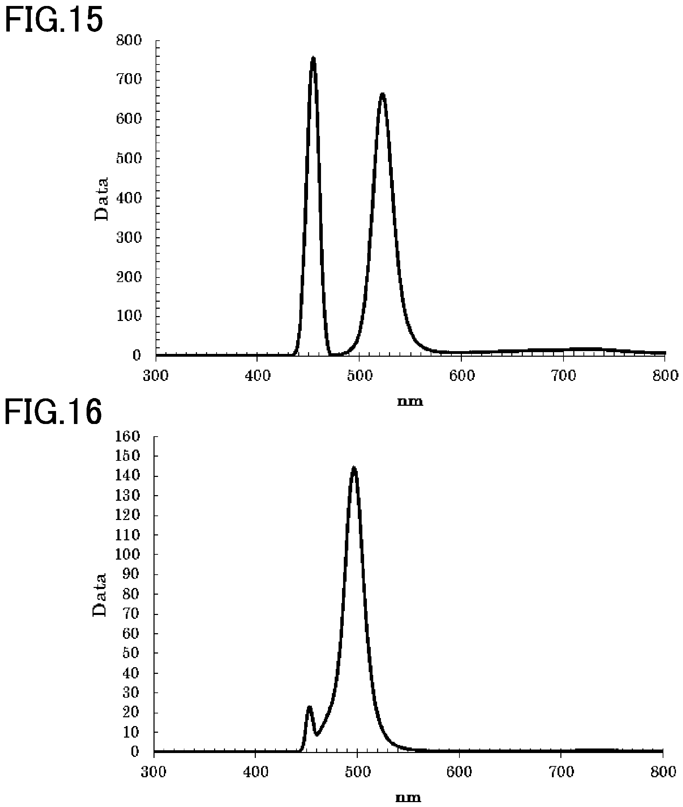

Measurements of the obtained reaction solution using a fluorescence spectrophotometer yielded optical characteristics with a fluorescence wavelength of 522.5 nm and a fluorescence half-width of 23.1 nm (refer to Fig. 15).

Ethanol was added to the resulting reaction solution to induce precipitation. The precipitate was recovered by centrifugation. Toluene was then added to the precipitate to dispersion, thus yielding a ZnTeSe particle dispersion solution.

### [Example 9]

A 100 mL reaction vessel was charged with anhydrous copper acetate, specifically 0.182 g of (Cu(OAc)₂), 1 mL of 0.5M trioctylphosphine telluride (Te-TOP solution), Se-DDT/OLAm solution (0.285 M) of 0.439 mL, dodecanethiol (DDT) of 2.5 mL, oleylamine (OLAm) of 0.25 mL, trioctylphosphine oxide (TOPO) of 0.387 g, and octadecene (ODE) of 20 mL. The mixture was then heated with stirring under an inert gas (N₂) atmosphere to dissolve the starting materials.

This solution was heated at 180°C whilst stirring for 20 minutes. The resulting reaction solution was cooled down to room temperature. Subsequently, 1.37 g of zinc chloride (ZnCl₂) was added to the reaction solution, followed by addition of 15 mL of trioctylphosphine (TOP) and 0.5 mL of oleylamine (OLAm). The mixture was then heated and stirred at 220°C for 30 minutes under an inert gas (N₂) atmosphere. Furthermore, 2.5 mL of zinc octanoate solution (0.1M) was added, and stirring was continued at 220°C for 10 minutes. The operation of adding additional zinc octanoate and performing heating and stirring was carried out twice in total.

Measurements of the resulting reaction solution using a fluorescence spectrophotometer yielded optical characteristics with a fluorescence wavelength of 496.5 nm and a fluorescence half-width of 21.3 nm (refer to Fig. 16).

Ethanol was added to the resulting reaction solution to induce precipitation. The precipitate was recovered by centrifugation. Toluene was then added to the precipitate for dispersion, thus yielding a ZnTeSe particle dispersion solution.

### [Example 10]

A 100 mL reaction vessel was charged with 0.091 g of anhydrous copper acetate (Cu(OAc)₂), 0.625 mL of dodecanethiol (DDT), 0.625 mL of trioctylphosphine (TOP), 0.194 g of trioctylphosphine oxide (TOPO), and 10 mL of octadecene (ODE). The charged materials were heated under stirring in an inert gas (N₂) atmosphere to dissolve the starting materials.

To this solution, 0.5 mL of trioctylphosphine telluride (Te-TOP solution (0.5 M)), 0.25 mL of Se-TOP solution (1M), and 0.125 mL of oleylamine (OLAm) were added. The mixture was heated at 180°C whilst stirring for 20 minutes. The resulting reaction solution was cooled down to room temperature. Subsequently, 0.685 g of zinc chloride (ZnCl₂), 7.5 mL of trioctylphosphine (TOP), 0.25 mL of oleylamine (OLAm), and 0.066 mL of triphenyl phosphinous acid were added to the mixture, and the mixture was stirred and heated at 220°C for 30 minutes under an inert gas (N₂) atmosphere. Further, 1.25 mL of zinc octanoate solution (0.1M) was added and stirred continuously at 220°C for 10 minutes. The operation of adding additional zinc octanoate and performing heating and stirring was carried out twice in total.

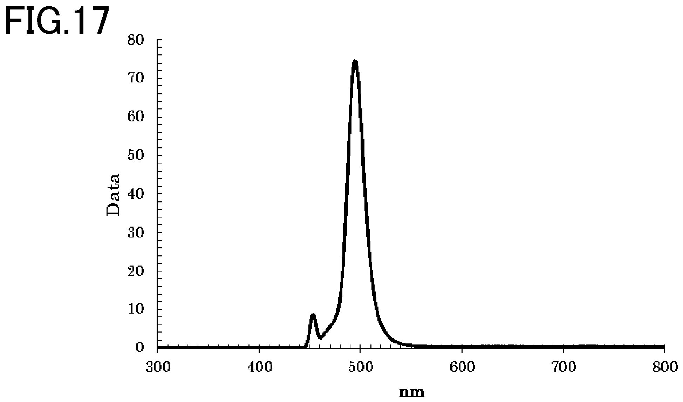

The resulting reaction solution was then measured using a fluorescence spectrophotometer. The optical characteristics were a fluorescence wavelength of 495.0 nm and a fluorescence half-width of 18.7 nm (refer to Fig. 17).

Ethanol was added to the resulting reaction solution to produce a precipitate, which was recovered by centrifugation. Toluene was then added to the precipitate for dispersion thereof, thus yielding a ZnTeSe particle dispersion solution.

In this example, the fluorescence half-width was 40 nm or less in all cases. Additionally, it was found that the fluorescence half-width could be reduced to 30 nm or less, and furthermore, to 28 nm or less, and furthermore, to approximately 25 nm or less.

It was also found that green-emitting quantum dots can be synthesized.

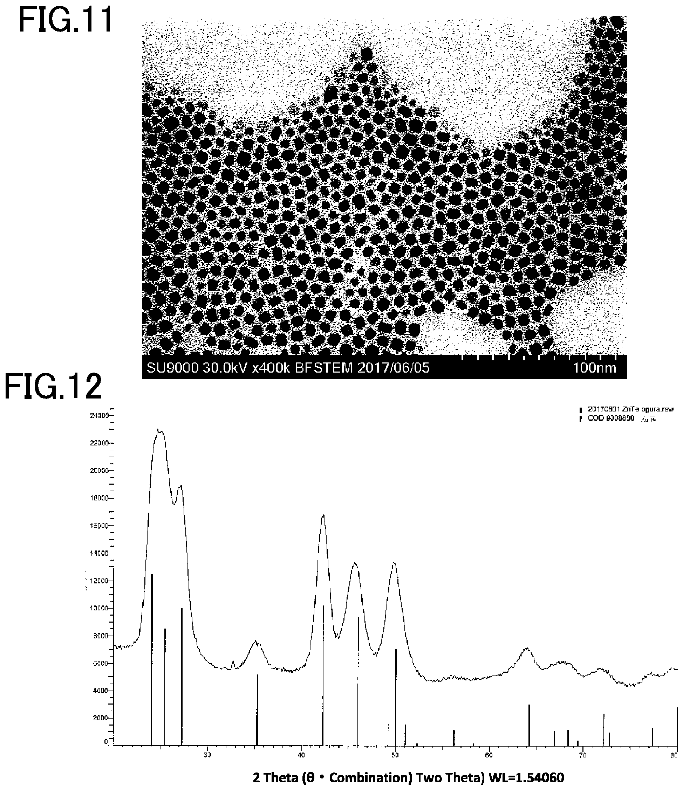

Meanwhile, the dispersion solution of ZnTe particles according to the example 1 was measured using a scanning electron microscope (SEM) and an X-ray diffraction (XRD) apparatus. Fig. 11 shows results measured by the scanning electron microscope (SEM) measurement results, while Fig. 12 shows results measured by the X-ray diffraction (XRD).

Furthermore, the dispersion solution of Cu₂Te particles from the example 1 was measured using a scanning electron microscope (SEM). The results are shown in Fig. 13.

As shown in Figs. 11 and 13, it was found that the particle sizes of both the ZnTe particles, acting as quantum dots, and the Cu₂Te particles, acting as precursors, could be produced with near-uniformity.

Furthermore, the peak value in the XRD spectrum of ZnTe shown in Fig. 12 proved that a ZnTe solid solution has been formed.

### [Industrial Applicability]

According to the present invention, for example, quantum dots exhibiting high-luminescence green fluorescence can be stably obtained. Furthermore, by applying the quantum dots of the present invention to devices such as LEDs, backlight units, and display devices, excellent light-emitting characteristics can be obtained in each device.

This application is based on Japanese Patent Application No. 2023-170558 filed on 29 September 2023. The contents thereof are hereby incorporated herein by reference.

## Claims

1. A quantum dot provided with a cadmium-free core-shell structure, **characterized in that**
the core contains at least Zn and Te and
the shell contains at least Mg and S.

2. The quantum dot according to claim 1, **characterized in that** the quantum dot is composed of (a core containing Zn and Te)/MgS, (a core containing Zn and Te)/ZnMgS/MgS, (a core containing Zn and Te)/MgS/ZnS, (a core containing Zn and Te)/ZnMgS/MgS/ZnS, (a core containing Zn and Te)/MgS/ZnO, or (a core containing Zn and Te)/ZnMgS/MgS/ZnO.

3. The quantum dot according to claim 1, **characterized in that** a fluorescence wavelength is between 490 nm and 550 nm.

4. The quantum dot according to claim 1, **characterized in that** the core-shell structure is a Type I structure.
